# EUROPÄISCHE PATENTANMELDUNG

(11) **EP 1 413 810 A1**
(43) Veröffentlichungstag der Anmeldung: **28.04.2004**
(21) Anmeldenummer: 03018038.4
(22) Anmeldetag: 07.08.2003
(51) Int. Cl.: F16K 31/00, F16K 31/56

(54) **Steuervorrichtung**

(30) Priorität: 22.10.2002 DE 10249197; 25.02.2003 DE 10308017
(71) Anmelder: MOOG GmbH, 71034 Böblingen (DE)
(72) Erfinder: Quast, Norbert, 71134 Aidlingen (DE); Czeppel, Thomas, 75378 Möttlingen (DE); Kölbl, Udo, 71155 Altdorf (DE); Ziegler, Rolf, 75428 Illingen (DE)
(74) Vertreter: Grünecker, Kinkeldey, Stockmair & Schwanhäusser Anwaltssozietät

(57) **Zusammenfassung**

Die Erfindung ist gekennzeichnet dadurch, dass sich die vorliegende Erfindung auf eine Verstellvorrichtung insbesondere für ein Turbinenventil oder insbesondere für einen Stellantrieb an einem Windrad, mit einer Antriebseinrichtung (2), mit einer Schiebeeinrichtung (4) und mit einer Vorspanneinrichtung (12), mit der Schiebeeinrichtung (4) die im vorgespannten Zustand mitbeweglich in eine vorbestimmte Stellposition ausgestaltet ist bezieht. Das Besondere ist, dass die in der Vorspannung gespeicherte Energie über ein Getriebe (8) auf die Schiebeeinrichtung übertragbar ist.

Bei einer derartigen Erfindung besteht keine Brandgefahr, ist ein besonders schnelles Notbetätigen gewährleistet und wird häufiges Warten oder starke Materialermüdung vermieden.

## Beschreibung

Die vorliegende Erfindung bezieht sich auf eine Verstellvorrichtung, für ein Turbinenventil oder für einen Stellantrieb an einem Windrad, die mit einer Antriebeinrichtung, mit einer Schiebeeinrichtung und mit einer Vorspanneinrichtung, mit der Schiebeeinrichtung in eine vorbestimmte Stellposition mitbeweglich ausgestaltet ist, wobei die in der Vorspanneinrichtung gespeicherte Energie über ein Getriebe auf die Schiebeeinrichtung übertragbar ist.

Aus dem Stand der Technik sind Vorrichtungen bekannt, welche eine Notfallbetätigung eines Steuerelementes ermöglichen. Dabei werden im Regelfall hydraulische Kolbenantriebe oder Federspeicher verwendet.

Aus der Veröffentlichung WO 02/35123A1 ist ein Stellantrieb für ein Ventil, insbesondere für ein Turbinenventil bekannt. In dieser Druckschrift wird ein Stellantrieb beschrieben, welcher eine Vorspanneinrichtung aufweist. Diese Vorspanneinrichtung wird zwischen einer Freigabevorrichtung und einer Ventilspindel vorgespannt. Die Vorspanneinrichtung enthält Tellerfedern. Diese Tellerfedern sind im normalen Betriebszustand vorgespannt. Durch eine elektromagnetische Betätigung der Freigabevorrichtung entspannt sich die Vorspanneinrichtung. Die Tellerfedern entspannen sich und bewegen dann die Ventilspindel. Diese Bewegung wird nur in einem Notfall durchgeführt. Im Regelfall, im normalen Betrieb, wird die vorgespannte Vorspanneinrichtung mit dem gesamten Stellantrieb zum Öffnen und Schließen eines Ventiles verfahren.

Während hydraulische Verstellvorrichtungen und Stellantriebe den Nachteil einer inhärenten Brandgefahr bergen, weist der Stellantrieb, wie er aus der Druckschrift WO 02/35123A1 bekannt ist einen anderen wesentlichen Nachteil auf. Die Betätigung der Freigabevorrichtung erfolgt durch einen elektromagnetischen Impuls. Zusätzlich dazu ist die Freigabevorrichtung aus biegsamen, insbesondere federelastischen Zungen gebildet. Diese biegsamen, insbesondere federelastischen Zungen haben jedoch den Nachteil einer Materialermüdung. Dieser Nachteil wird zusätzlich durch das Verschieben und Verkeilen einer Einrastrampe in diese Zungen verstärkt. Ein erhöhter Materialabtrag ist die Folge.

Es ist somit Aufgabe der vorliegenden Erfindung eine Steuervorrichtung mit einer integrierten Freigabevorrichtung zu gestalten, die auch bei Wegfall einer elektrischen Stromversorgung störungsfrei und sicher arbeitet und wartungs- bzw. verschleißfrei ausgestaltet ist.

Diese Aufgabe wird dadurch gelöst, dass das Getriebe als Kniehebel ausgestaltet ist.

Ein Kniehebel ist ein Mechanismus, der aus zumindest zwei miteinander gelenkig verbundenen Hebeln besteht. An zumindest einem Ende eines Hebels ist die Schiebeeinrichtung angebracht. Während die Schiebeeinrichtung, bei bewegtem Kniehebel in eine Richtung verfährt, fährt dass die Hebel verbindende Gelenk in eine dazu orthogonale Richtung. Ein fast gestreckter Kniehebel überträgt sehr hohe Kräfte in Längsrichtung, wobei lediglich ein geringer Kraftaufwand zum Halten des Kniehebels in dieser fast gestreckten Position aufgebracht werden muss. Die Verwendung eines Kniehebels ermöglicht somit eine nahezu wartungsfreie und entwicklungsextensive Gestaltung in einem ganz besonderen Maße.

Vorteilhafte Ausgestaltungen sind in den Unteransprüchen dargestellt.

Besonders vorteilhaft ist es auch, wenn das Getriebe magnetisch blockierbar ist. Dadurch ist gewährleistet, dass mit extrem kurzen Verzögerungen bei Wegfall des elektrischen Stroms die Magnetisierung aufgehoben wird und somit das Getriebe nicht mehr blockiert ist und nachfolgend ein Auslösen der Verstellvorrichtung erfolgt. Das Auslösen erfolgt besonders schnell und Ausfallsicher.

Durch die Verwendung eines Getriebes wird die in der Vorspanneinrichtung gespeicherte Energie in vorzugsweiser translatorische Bewegung der Schiebeeinrichtung gewandelt. Dieses Getriebe ist unabhängig von einer elektrischen Stromquelle betätigbar. Auch birgt ein mechanisches Getriebe keine akute Brandgefahr.

Die von der Schiebeeinrichtung zurückgelegte Bewegung kann aber auch eine translatorische Bewegung, oder eine rotatorische Bewegung, sowie zusammengesetzte Bewegungen umfassen.

Wenn der Kniehebel zumindest einen gelenkig mit einem Gehäuse in der Verstellvorrichtung verbundenen verstelleinrichtungsseitig zugewandten Hebel umfasst, welcher über ein Verbindungsgelenk an einem verstelleinrichtungsseitig abgewandten Hebel über ein Anbindungsgelenk an der Schiebeeinrichtung angebracht ist, so lässt sich ein weiterer Vorteil in dieser Ausgestaltungsvariante erreichen. Die Schiebeeinrichtung führt in einen Normalbetrieb eine translatorische Bewegung zusammen mit der gespannt verbleibenden Vorspanneinrichtung aus, wobei zum Halten des Kniehebels in einer fast gestreckten Position nur geringe Kräfte aufgewandt werden müssen. Ein Verklemmen wird dadurch verhindert.

Besonders vorteilhaft ist es in einer weiteren Variante, wenn das Getriebe mit einer Sicherungseinrichtung gegen zufälliges Entspannen der Vorspanneinrichtung gesichert ist. Dadurch wird vermieden, dass sich die Vorspanneinrichtung zufällig entspannt, und somit eine zufällige Bewegung der Schiebeeinrichtung initiiert wird.

Wenn die Sicherungseinrichtung zumindest einen die Bewegung des Getriebes verhindernden Sicherungsstift umfasst, so ist es möglich diesen Stift blockierend zum Halten des Kniehebels in einer fast gestreckten Position zu verwenden. Dieser Sicherungsstift ist mechanisch hoch verlässlich.

Besonders vorteilhaft ist auch eine Ausgestaltungsform, bei der die Schiebeeinrichtung eine Anlagefläche zum Verspannen der Verspanneinrichtung und ein vorzugsweise als Ventilkegel ausgebildetes Verstellelement umfasst. Durch die Anlagefläche lässt sich beim Anliegen des Ventilkegels an einen Ventilkörper und gleichzeitiger Betätigung der Antriebseinrichtung die Vorspanneinrichtung besonders einfach vorspannen. Eine derartige Ausgestaltung minimiert die Ausfallwahrscheinlichkeit weiter.

Wenn die Verstellvorrichtung zusammen mit der Vorspanneinrichtung mittels einer Antriebseinrichtung verschiebbar ausgestaltet ist, so muss ein Verfahren im Normalbetrieb der Verstellvorrichtung durch die Antriebseinrichtung nicht gegen die von einer Vorspanneinrichtung ausgehenden Kraft durchgeführt werden.

Vorteilhaft ist im Besonderen auch in einer Variante, wenn die Antriebseinrichtung eine Spindel umfasst. Spindeln sind einfach gestaltete, robuste Bauteile, die etwa durch die Variation der Spindelsteigung leicht zu variierende Übersetzungsverhältnisse aufweisen.

Wenn die Sicherungseinrichtung mit einer Auslöseeinrichtung verbunden ist, so zeigt sich in dieser Ausgestaltungsform ein weiterer Vorteil. Ein Notbetätigen der Verstellvorrichtung wird somit aktiv und einfach ermöglicht.

Besonders vorteilhaft ist in einer weiteren Ausgestaltungsform auch, wenn die Auslöseeinrichtung zumindest den über eine Elektromagnet bei Absenz eines Stromflusses betätigbaren Sicherungsstift umfasst. Dadurch wird ein mechanisch hoch belastbares Bauteil bei einem Stromausfall betätigt, was das Funktionieren der Verstellvorrichtung auch in diesem extremen Anwendungsgebiet ermöglicht. Eine besondere Sicherheit ist die Folge.

Wenn die Stellposition A bis zu 30 mm von der Stellposition B entfernt ist, ergibt sich eine vorteilhafte Möglichkeit des Einsatzes einer derartigen Verstellvorrichtung in dieser Variante für sehr viele Anwendungsfälle, wie etwa in Turbinen, oder Windkraftanlagen, oder sonstigen sicherheitsrelevanten Schaltvorrichtungen.

Besonders vorteilhaft ist es in einer Variante auch, wenn die Verstellvorrichtung ein bis 250 KN reichende Stellkraft aufbringend ausgestaltet ist. Dadurch ist der Einsatz in Turbinen, in denen große Kräfte beherrscht werden müssen, möglich.

Besonders vorteilhaft ist es in einer Variante auch, wenn ein zwischen dem verstelleinrichtungsseitig zugewandten Hebel befindlicher Zwangsöffnungswinkel α von 172° bis 177° vorliegt. Dadurch ist gewährleistet, dass der aus den zwei Hebeln gebildete Kniehebel nicht völlig durchgestreckt ist. Dadurch ist eine Schaltbarkeit der Verstellvorrichtung in einem Notfall mittels des Entspannens der Vorspanneinrichtung gewährleistet.

Wenn zumindest eine Anschlagfläche die Bewegung des Getriebes blockiert und magnetisch arretierbar ist, wird in dieser vorteilhaften Ausgestaltungsform gewährleistet, dass keine störenden Reibkräfte auftreten.

In einer weiteren vorteilhaften Ausgestaltungsvariante wird eine große Blockierfläche vorgesehen, in dem zumindest eine Anschlagfläche durch zumindest eine Klappe gebildet wird.

Wenn die Klappe mit zumindest einem Teil, zumindest eines Kniehebels verbunden ist, wird in dieser Variante vorteilhafterweise sichergestellt, dass im gespannten Zustand der Verstellvorrichtung die Klappe, auf Gegenanschlagflächen auftritt und somit die Bewegung des Kniehebels bei anliegenden Strom dauerhaft blockiert.

In einer Variante wird eine besonders stabile Ausgestaltungsform dadurch erreicht, dass vorteilhafterweise die Klappe als Klappanker ausgestaltet ist.

Wenn die dem Kniehebel zugewandte Anschlagfläche des Klappankers im arretierten Zustand auf zumindest eine Gegenanschlagfläche aufliegend ausgestaltet ist, so ist in dieser Variante vorteilhafterweise gewährleistet, dass ein Kraftschluss zwischen dem Klapparm, und den Gegenanschlagflächen magnetisch erfolgen kann und der Klappanker den Kniehebel in der gespannten Stellung hält.

Besonders vorteilhaft in einer weiteren Ausgestaltungsart wenn zumindest zwei Gegenanschlagsflächen durch Verbindung mit einem durch eine elektrische Spule induzierten Magnetfeld magnetisierbar sind, auf denen die Anschlagflächen im arretierten Zustand positionierbar ist. Eine elektrische Spule ist ein günstig zu erstehendes Produkt, welches ausfallsicher und störunanfällig die benötigte Haltekraft von ca. 12 KN aufbringen kann um den Klappanker in einer arretierten Stellung zu halten. Die Kraft muss gegen die von der Feder aufgebrachten Federkraft wirken.

Wenn die Spule in einer Variante in einem Gehäuse vorteilhafterweise außerhalb einer Führungshülse verläuft, so lässt sich eine kompakte Bauart bewerkstelligen.

Die Erfindung betrifft des Weiteren ein Verfahren zum Bewegen eines Verstellelementes mit einer Vorspanneinrichtung zum Schnellbewegen des Verstellelementes, wobei die Verstellvorrichtung zusammen mit der Vorspanneinrichtung durch eine Antriebseinrichtung in die Stellposition A und B bewegt wird. Die Stellpositionen sind vorbestimmt. Im Gegensatz zum Stand der Technik, ist die Erfindung dadurch gekennzeichnet, dass die Vorspanneinrichtung von einem durch zumindest eine Sicherungseinrichtung abgesicherten Getriebe in einem vorgespannten Zustand gehalten wird. Eine derartige Ausgestaltung hat den Vorteil, dass die Vorspannung nicht in jedem Schaltvorgang überwunden werden muss.

Wenn eine elektrische Spule mit Strom durchflossen wird, und ein magnetisches Feld durch zumindest eine Gegenanschlagsfläche aufbaut, auf der mindestens die eine dem Kniehebel zugewandte Anschlagfläche der Klappe aufliegt und bei eingeschalteten Stromkreis der Spule derart arretiert wird, dass eine Bewegung des Kniehebels zumindest in eine Richtung verhindert wird, so ist ein besonders sicheres und schnelles Auslösen der Verstelleinrichtung die Folge.

Vorteilhaft ist auch, wenn in einer Variante ein Wegfall von Strom an einem Elektromagneten einer Auslöseeinrichtung zur Bewegung des zumindest einen Sicherungsstiftes der Sicherungseinrichtung führt, wodurch eine nachfolgende Bewegung des Getriebes zu einer Umwandlung der in der Vorspanneinrichtung gespeicherten Energie in eine vorzugsweise translatorische Bewegung einer Schiebeeinrichtung mit darin integriertem Verstellelement führt. Durch den Einsatz von Elektromagneten, welcher bei Ausfall eines elektrischen Stromes eine Schaltung vornimmt, ist gewährleistet, dass selbst bei Wegfall von Strom eine Schaltbarkeit der Verstellvorrichtung gewährleistet bleibt.

Wenn der Schließvorgang unter Einwirkung der sich entspannenden Vorspanneinrichtung bis zu 200 ms schnell abläuft, ermöglicht dies in dieser Variante den Einsatz einer derartigen Verstellvorrichtung in zeitkritischen Bauelementen vorteilhafterweise.

Im Folgenden werden Ausführungsbeispiele der vorliegenden Erfindung anhand einer Zeichnung näher erläutert. Es zeigen:
- Fig. 1: ist eine Verstellvorrichtung schematisch in Schaltposition A und entspannter Vorspanneinrichtung dargestellt,
- Fig. 2: in schematischer Weise eine Verstellvorrichtung mit gespannter Vorspanneinrichtung in einer Schaltposition A,
- Fig. 3: die Verstellvorrichtung in Schaltposition B und gespannter Vorspanneinrichtung in schematischer Weise,
- Fig. 4: den entspannten Zustand in schematischer Weise einer Verstellvorrichtung in Schaltposition A nach einer Notschaltung,
- Fig. 5: eine perspektivische Ansicht einer Steuervorrichtung,
- Fig. 6: eine perspektivische Ansicht eines Getriebes mit damit verbundenem Ventilkegel,
- Fig. 7: eine Sicherungseinrichtung mit einer Auslöseeinrichtung, einem Elektromagneten und zwei Sicherungsstiften,
- Fig. 8: ein Detail aus Fig. 3 mit einem Sicherungsstift im haltenden Zustand eines Kniehebels,
- Fig. 9: eine perspektivische Ansicht der Schiebeeinrichtung im eingebautem Zustand eines Abdeckgehäuses mit einer magnetisch betätigbaren Klappe zum arretieren der Kniehebelbewegung,
- Figur 10: eine perspektivische Teilansicht des Abdeckgehäuses aus Figur 9,
- Figur 11: eine perspektivische Ansicht der Kniehebelkinematik aus den Figuren 1 bis 6 und Figur 9 im vorgespannten Zustand,
- Figur 12: die Kniehebelkinematik aus den vorangegangenen Figuren im ausgelösten Zustand im Gegenstand zum vorgespannten Zustand aus Figur 11,
- Figur 13: zeigt einen partiellen Schnitt durch das Abdeckgehäuse aus Figur 9 und den Kniehebel aus Figur 12 im ausgelösten Zustand im Schnitt.

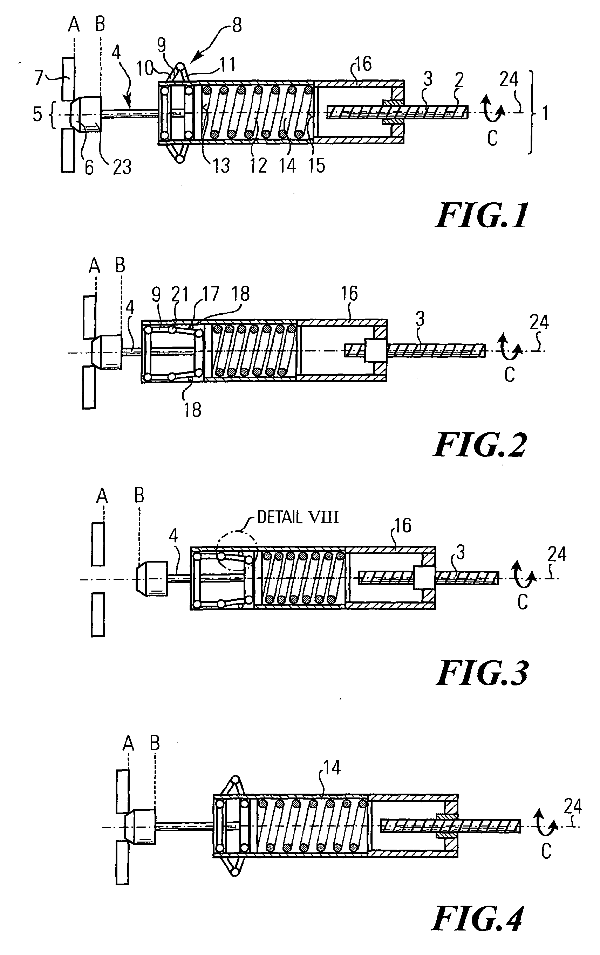

In Fig. 1 ist eine Verstellvorrichtung 1 dargestellt. Die Verstellvorrichtung1 umfasst eine Antriebseinrichtung 2 mit einer Spindel 3. Die Spindel 3 bewegt ein Gehäuse 16 der Verstellvorrichtung1.

Im Gehäuse 16 ist eine Schiebeeinrichtung 4 beweglich gelagert. Entlang einer Längsachse 24 ist die Schiebeeinrichtung 4 verschieblich. An einem Ende der Schiebeeinrichtung 4 ist ein Verstellelement 23 ausgebildet. Das Verstellelement 23 hat die Form eines Ventilkegels 6. Dieser Ventilkegel 6 schließt schlüssig mit einer Ventilöffnung 5 eines Ventilkörpers 7 in der Schaltposition ab. An dem anderen Ende ist eine Anlagefläche 13 ausgebildet. Zwischen der Anlagefläche 13 und einer fest mit dem Gehäuse 16 verbundenen Abstützfläche 15 ist eine Vorspanneinrichtung 12 eingebaut. Die Vorspanneinrichtung 12 umfasst eine Feder 14. Die Feder 14 ist als Schraubenfeder ausgestaltet. Es ist jedoch auch möglich Tellerfedern, Spiralfedern, oder sonstige federnde Elemente zu verwenden.

Zwischen Gehäuse 16 und Scheibeeinrichtung 4 ist ein Getriebe 8 geschalten. Das Getriebe 8 umfasst zwei Kniehebelmechanismen 9. Die Kniehebel 9 sind an einem Punkt gelenkig mit dem Gehäuse 16 verbunden und an einem anderen Punkt gelenkig mit der Schiebeeinrichtung 4 verbunden. Je ein Kniehebel 9 umfasst einen verstelleinrichtungsseitig zugewandten Hebel 10 und einen verstelleinrichtungsseitig abgewandten Hebel 11, welche beide miteinander gelenkig verbunden sind.

Die Spindel 3 ist in zwei Richtungen gemäß Pfeil C bewegbar. Durch diese Bewegung wird das Gehäuse 16 bewegt. Fig. 2 zeigt das Bewegen des Gehäuses 16 auf den Ventilkörper zu. Dadurch gerät der Kniehebel 9 in einen beinahe gestreckten Zustand. Es ist jedoch zu beachten, dass die Kniehebel 9 vorzugsweise nicht in einen völlig gestreckten Zustand gelangen. Dass das, die zwei Hebel 11 und 12 des Kniehebels verbindende Verbindungsgelenk 21 sich kurz vor dem oberen Todpunkt befindet. Die Sicherungseinrichtung 17 mit den Sicherungsstiften 18 hält beide Kniehebel in dieser Position.

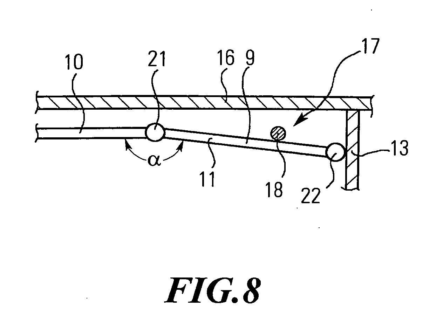

In Fig. 3 ist ein Verfahren des Gehäuses über die Spindel 3 in die Schaltposition B gezeigt. In den Fig. 1 und 2 befindet sich die Verstellvorrichtung in Schaltposition A. In Fig. 3 ist gezeigt, dass die Kniehebel 9 durch die Sicherungsvorrichtung 17 in einer arretierten Position selbst im verfahrenden Zustand bleiben. Die Vorspanneinrichtung 12 mit der Feder 14 ist dabei gespannt. Das Detail VIII, welches in Fig. 8 dargestellt ist, zeigt deutlich die Position der Sicherungsstifte 18.

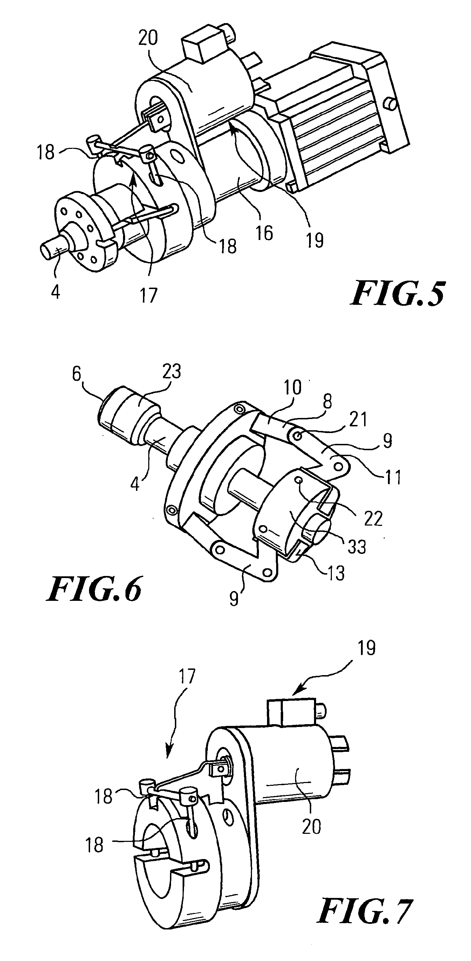

In Fig. 4 ist die Position der Schiebeeinrichtung nach dem Auslösen der Vorspanneinrichtung, in einer Notfallschaltmaßnahme, zu sehen. Die Schiebeeinrichtung 4 befindet sich nun wieder in der Schaltposition A. Der dem Ventilkörper abgewandete Teil des Gehäuses 16 befindet sich in derselben Position, wie in Fig. 3.

In Fig. 5 ist die Verstellvorrichtung1 mit Schiebeeinrichtung 4, die Sicherungseinrichtung 17 mit den Sicherungsstiften 18, die Auslöseeinrichtung 19 mit dem Elektromagnet 20 und das Gehäuse 16 zu sehen. Der Elektromagnet 20 gibt bei Wegfall der elektrischen Stromversorgung eine Umlenkeinrichtung 3, welche die Stifte 18 bewegt, frei.

In Fig. 6 ist die Verschiebeeinrichtung 4 mit dem Verstellelement 23 und dem Ventilkegel 6 dargestellt. Deutlich erkennbar ist das Getriebe 8 mit den Kniehebeln 9. Die Kniehebel 9 sind durch je zwei Hebel 10 und 11 aufgebaut. Die Hebel 10 und 11 sind durch jeweils ein Verbindungsgelenk 21 miteinander verbunden. Der Hebel 11 ist über ein Anbindungsgelenk 22 mit der Schiebeeinrichtung 4 verbunden. Die Anlagefläche 13 der Schiebeeinrichtung 4 ist ebenso deutlich erkennbar.

In Fig. 7 ist die Sicherungseinrichtung 17 mit den Sicherungsstiften 18 sowie die daran anschließende Auslöseeinrichtung 19 mit dem darin umfassenden Elektromagnet 20 dargestellt.

In Fig. 8 ist der Detailausschnitt VIII aus Fig. 3 dargestellt. Es ist deutlich der Zwangs-Öffnungswinkel α zwischen einen der Hebel 10 und einen der Hebel 11 des Kniehebels 9 um das Verbindungsgelenk 21 dargestellt. Das Anbindungsgelenk 22 ist ebenso deutlich gekennzeichnet. Gut erkennbar sind auch die Anlageflächen 13 und das Gehäuse 16.

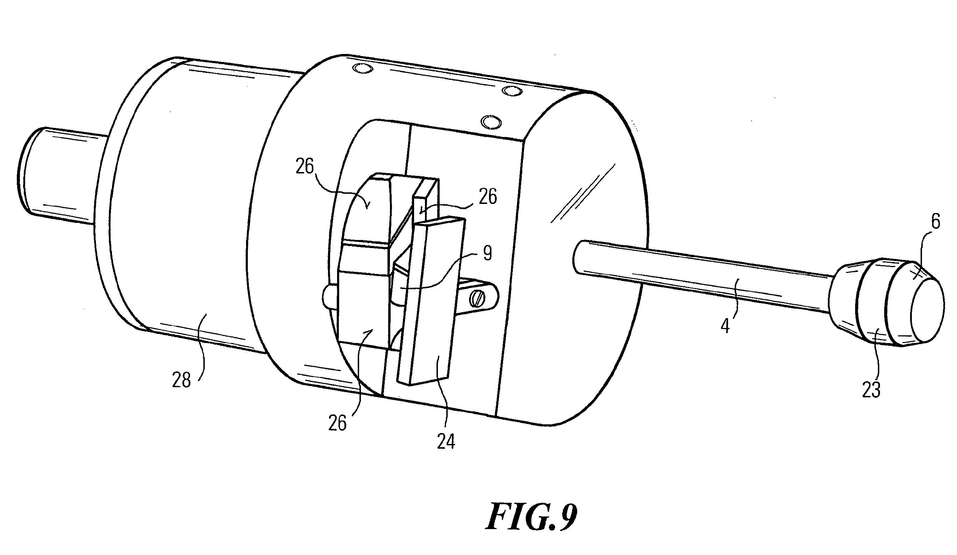

In Fig. 9 ist perspektivisch dargestellt wie sich die Geometrieverhältnisse des ausgelösten Kniehebels mit einer magnetisch betätigbaren Klappe 24 verhalten. Die Schiebeeinrichtung 4 mit dem Verstellelement 23 ist im ausgefahrenen Zustand. Der Ventilkegel 6 des Verstellelementes 23 gerät in Kontakt mit der Ventilöffnung 5 (nicht dargestellt).

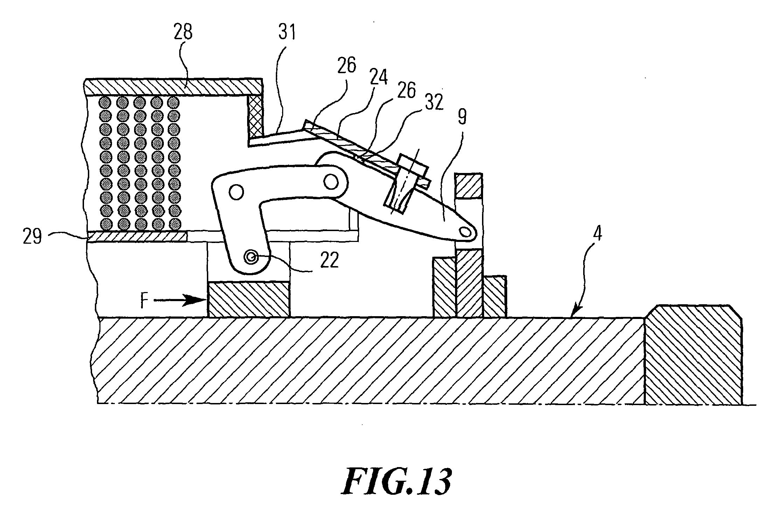

Im Abdeckgehäuse 28 verlaufend, nicht dargestellt, ist eine Spule 27 (siehe vor allem Figur 13) die in magnetischen Kontakt mit Gegenanschlagflächen 26 ausgestaltet ist. Eine Klappe 24 ist auf dem Kniehebel 9 befestigt. Im vorgespannten Zustand liegt die Klappe 24 mit einer Anschlagfläche 25, welche Kniehebel 9 zugewandt ist, auf den Gegenanschlagflächen 26 auf. Fließt Strom durch die Spule 27, so sind die Gegenanschlagflächen magnetisiert und halten die Klappe 24 auf den Gegenanschlagflächen 26 fest. Dadurch wird eine Bewegung des Kniehebels verhindert. Die Konstruktion ist symmetrisch zu einer Symmetrieebene durch die Längsachse der Steuereinrichtung 1 ausgebildet. Somit gibt es in einer präferierten Ausgestaltungsform zwei Klappen, jeweils auf einer Seite der Vorrichtung. Die Klappen 24 liegen beide auf unterschiedlichen Gegenanschlagsflächen 26, welche auch auf beiden Seiten der Vorrichtung 1 ausgebildet sind. Die Klappe 24 ist mit einer Schraube auf jeweils einem Kniehebel 9 befestigt. Die Schraube selber ist kein tragendes Element.

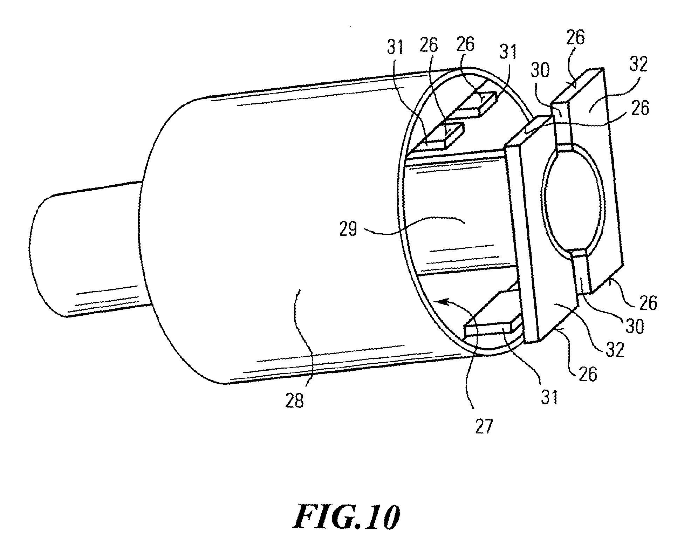

In Figur 10 ist eine perspektivische Teilansicht des Abdeckgehäuses 28 dargestellt. Das Abdeckgehäuse 28 ist ein Zylinder, der auf der einen Seite geschlossen ist. In dem Zylinder verläuft die Spule 27. Die Spule 27 ist mit Zapfen 31 magnetisch und/oder elektrischleitend verbunden. Die Zapfen 31 bilden Polkörper. Gegenpolkörper 32 ergänzen die Polkörper 31 im Sinne eines geschlossenen Magnetkreises.

Konzentrisch zu dem Abdeckgehäuse 28 ist eine Führungshülse 29 positioniert. In der Führungshülse 29 verläuft das Anbindungsgelenk 22, mit einem Führungskörper 33. Der Führungskörper 33 kann auch aus Figur 6 entnommen werden. Die Führungshülse 29 kann auch baugleich ausgestaltet werden zum Gehäuse 16. In der Führungshülse 29 sind zwei sich gegenüberliegende Schlitze 30 angeordnet. Die Schlitze 30 sind etwa in Höhe der Polkörper 31 und vom Gegenpolkörper 32 angebracht. Die Polkörper 31 und die Gegenpolkörper 32 sind geteilt ausgestaltet, damit die Kniehebel, welche sich in den Schlitzen 30 bewegen, zwischen den Polkörpern und Gegenpolkörpern und durch Führungshülse 29 hindurch beweglich sind.

Die Gegenpolkörper 32 und Polkörper 31 sind im vorgespannten Zustand und verriegelten Zustand der Verstellvorrichtung über die Klappe 24 miteinander verbunden. Die Klappe 24 wird magnetisch auf den Gegenanschlagflächen 26 gehalten. Derzeit werden Kräfte von sechs bis 12 KN aufgebracht.

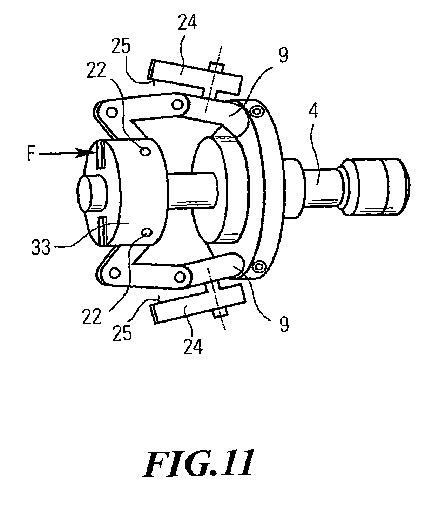

In Figur 11 ist die Anbindung der Kniehebel 9 über die Anbindungsgelenke 22 in dem Führungskörper 33 dargestellt. Die Anordnung ist im vorgespannten Zustand gezeichnet. Die Schiebeeinrichtung 4 ist noch nicht ausgelöst. Die Kraft F, die durch die Feder 14 aufgebracht wird, wird magnetisch mit Hilfe der Klappe 24 egalisiert.

Es ergibt sich ein statisches Gleichgewicht, so lange der Strom durch die Spule 27 (nicht dargestellt) fließt. Solange der Strom durch die Spule 27 fließt, bleibt die Klappe 24 mit der Anschlagfläche 25 magnetisch auf den Gegenanschlagflächen 26 (wie in Figur 9 und 10 beschrieben) arretiert.

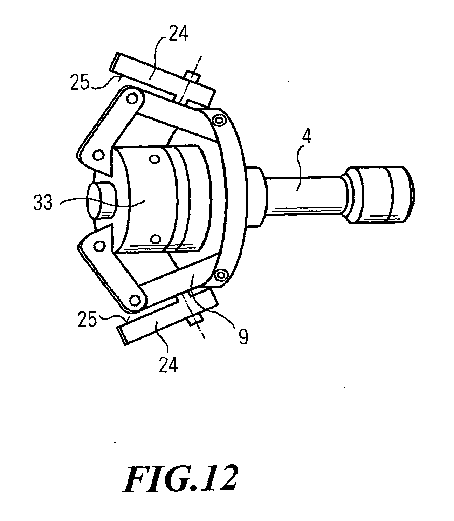

In Figur 12 ist die Schiebeeinrichtung 4 im ausgefahrenen, d.h. ausgelösten Zustand dargestellt. Der Führungsköper 32 ist durch die Kraft der Feder 14 in Richtung der Ventilöffnung 5 verschoben worden. Dies wurde dadurch möglich, dass sich die Klappen 24 von den Gegenanschlagflächen gelöst haben. Im arretierten Zustand lagen die Klappen 24 auf den Anschlagflächen derart auf, dass die Kniehebel 9 förmlich die Klappen 24 berührten, die sie jedoch nicht wegdrücken konnten. Nun ist dies möglich. Die Klappen gehen jedoch nicht verloren, da sie an den Kniehebel 9 angeschraubt sind, sondern ändern nur ihre Position.

In Figur 13 ist ein partieller Schnitt durch die Verschiebevorrichtung dargestellt. Die Position der Spule zwischen der Führungshülse 29 und dem Abdeckgehäuse 28 ist deutlich zu erkennen. In dem partiellen Halbschnitt ist die Kraft F durch einen Pfeil gekennzeichnet. Die Kraft F wird durch die Feder 14 erzeugt. Die Klappe 24 liegt auf den Gegenanschlagsflächen 26 sowohl des Polkörpers 31 als auch des Gegenpolkörpers 32 auf. Dadurch ist eine Bewegung des Kniehebels 9 verhindert.

In der Figurenabfolge 1, 2, 3 und 4 ist der Ablauf unterschiedlicher Betätigungszustände der Verstellvorrichtung 1 dargestellt. Im entspannten Zustand der Vorspanneinrichtung 12 wird über die Spindel 3 die Verschiebeeinrichtung 4 mit dem als Ventilkegel ausgestattetem Verstellelement 22 in die Schaltposition A gefahren. Nach Erreichen der Schaltposition A bewegt die Spindel 3 das Gehäuse 16 weiter in Richtung Ventilkörper 7. Dadurch streckt sich der Kniehebel 9. Gleichzeitig wird die Feder 14 der Vorspanneinrichtung 12 komprimiert. Dies ist in Fig. 1 zu sehen. Danach, kurz vor Erreichen des Totpunktes von Verbindungselement 23 des Kniehebels 9, wird über die Sicherungseinrichtung 17 jeweils ein Sicherungsstift 18 zum Sichern eines Kniehebels 9 eingesetzt. Der Kniehebel 9 bleibt somit, wie in Fig. 2 ersichtlich, in dieser fast komplett ausgestreckten Position. Es fehlen zu einem 180° Winkel zwischen den beiden Hebeln 10 und 11 lediglich 3 bis 8 Grad. In dieser Position, mit gesichert bleibenden Sicherungsstiften 18, wird das Gehäuse 16 und die Verschiebeeinheit 4 durch die Spindel 3, welche gemäß der Pfeilrichtungen C drehbar ist, in die Schaltpositionen A und B, wie in Fig. 2 und 3 ersichtlich, bewegt.

Ist die Verstellvorrichtung in einer Position B, wie in Fig. 3, und tritt ein Notfall auf, so wird über das Wegfallen eines elektrischen Stromschlusses in einem Elektromagnet 20, der Auslöseeinrichtung 19, ein Wegbewegen der Sicherungsstifte 18 von Kniehebel 9 bewirkt. Dadurch, wie in Fig. 4 zu sehen, schnellt die Schiebeeinrichtung 4 sofort in die Schaltposition A. Dabei entspannt sich die Feder 14.

Dieser Zyklus ist beliebig oft durchfahrbar.

## Patentansprüche

1. Verstellvorrichtung (1), für ein Turbinenventil oder für einen Stellantrieb an einem Windrad, mit einer Antriebseinrichtung (2), mit einer Schiebeeinrichtung (4) und mit einer Vorspanneinrichtung (12), die im vorgespannten Zustand mit der Schiebeeinrichtung in eine vorbestimmte Stellposition mitbeweglich ausgestaltet ist, wobei die in der Vorspanneinrichtung (12) gespeicherte Energie über ein Getriebe (8) auf die Schiebeeinrichtung (4) übertragbarer ist, **dadurch gekennzeichnet, dass** das Getriebe (8) als Kniehebel (9) ausgebildet ist.

2. Verstellvorrichtung (1) nach Anspruch 1, **dadurch gekennzeichnet, dass** das Getriebe (8) magnetisch blockierbar ist.

3. Verstellvorrichtung (1) nach Anspruch 1 oder 2, **dadurch gekennzeichnet, dass** der Kniehebel (9) zumindest einen gelenkig mit einem Gehäuse (16) der Verstellvorrichtung(1) verbundenen verstelleinrichtungsseitig zugewandten Hebel (10) umfasst, welcher über ein Verbindungsgelenk (21) an einem verstelleinrichtungsseitig abgewandten Hebel (11), der über ein Anbindungsgelenk (22) an der Schiebeeinrichtung (4) angebracht ist.

4. Verstellvorrichtung (1) nach einem der Ansprüche 1 bis 3, **dadurch gekennzeichnet, dass** das Getriebe (8) mit einer Sicherungseinrichtung (17) gegen zufälliges Entspannen der Vorspanneinrichtung gesichert ist.

5. Verstellvorrichtung (1) nach Anspruch 1 oder 4, **dadurch gekennzeichnet, dass** die Sicherungseinrichtung (17) zumindest ein die Bewegung des Getriebes (8) verhindernden Sicherungsstift (18) umfasst.

6. Verstellvorrichtung (1) nach einem der Ansprüche 1 bis 5, **dadurch gekennzeichnet, dass** die Schiebeeinrichtung (4) eine Anlagefläche (13) zum Vorspannen der Vorspanneinrichtung (12) und ein vorzugsweise als Ventilkegel (6) ausgebildetes Verstellelement (23) umfasst.

7. Verstellvorrichtung (1) nach einem der Ansprüche 1 bis 6, **dadurch gekennzeichnet, dass** die Verstellvorrichtung(1) zusammen mit der Vorspanneinrichtung (12) mittels einer Antriebseinrichtung (2) verschiebbar ausgestaltet ist.

8. Verstellvorrichtung (1) nach einem der Ansprüche 1 bis 7, **dadurch gekennzeichnet, dass** die Antriebseinrichtung (2) eine Spindel (3) umfasst.

9. Verstellvorrichtung (1) nach einem der Ansprüche 1 bis 8, **dadurch gekennzeichnet, dass** die Sicherungseinrichtung (17) mit einer Auslöseeinrichtung (19) verbunden ist.

10. Verstellvorrichtung (1) nach Anspruch 9, **dadurch gekennzeichnet, dass** die Auslöseeinrichtung (19) zumindest den über ein Elektromagnet (20) bei Absenz eines Stromschlusses betätigbaren Sicherungsstift (18) umfasst.

11. Verstellvorrichtung (1) nach einem der Ansprüche 1 bis 10, **dadurch gekennzeichnet, dass** die Stellposition A bis zu 30 mm von der Stellposition B entfernt ist.

12. Verstellvorrichtung (1) nach einem der Ansprüche 1 bis 11, **dadurch gekennzeichnet, dass** die Verstellvorrichtung (1) eine bis 250 KN reichende Stellkraft aufbringend ausgestaltet ist.

13. Verstellvorrichtung (1) nach einem der Ansprüche 2 bis 12, **dadurch gekennzeichnet, dass** ein zwischen dem verstelleinrichtungsseitig zugewandten Hebel (11) und dem verstelleinrichtungsseitig abgewandten Hebel (12) befindlicher Zwangs-Öffnungswinkel α von 172° bis 177° vorliegt.

14. Verstellvorrichtung (1) nach einem der Ansprüche 1 bis 13, **dadurch gekennzeichnet, dass** zumindest eine Anschlagfläche (25) die Bewegung des Getriebes (8) blockiert und magnetisch arretierbar ist.

15. Verstellvorrichtung (1) nach einem der Ansprüche 1 bis 14, **dadurch gekennzeichnet, dass** die zumindest die eine Anschlagfläche (25) durch zumindest eine Klappe (24) gebildet wird.

16. Verstellvorrichtung (1) nach einem der Ansprüche 1 bis 15, **dadurch gekennzeichnet, dass** die Klappe (24) mit zumindest einem Teil zumindest eines Kniehebels (9) verbunden ist.

17. Verstellvorrichtung (1) nach einem der Ansprüche 1 bis 16, **dadurch gekennzeichnet, dass** die Klappe (24) als Klappanker ausgestaltet ist.

18. Verstellvorrichtung (1) nach einem der Ansprüche 1 bis 17, **dadurch gekennzeichnet, dass** die dem Kniehebel (9) zugewandte Anschlagfläche (25) des Klappankers im arretierten Zustand auf zumindest einer Gegenanschlagfläche (26) aufliegend ausgestaltet ist.

19. Verstellvorrichtung (1) nach einem der Ansprüche 1 bis 18, **dadurch gekennzeichnet, dass** zumindest zwei Gegenanschlagflächen (26) durch Verbindung mit einem durch eine elektrische Spule (27) induzierten Magnetfeld magnetisierbar sind, auf denen zumindest die eine Anschlagfläche (25) im arretierten Zustand positionierbar ist.

20. Verstellvorrichtung (1) nach einem der Ansprüche 1 bis 19, **dadurch gekennzeichnet, dass** die Spule (27) in einem Gehäuse (28) außerhalb einer Führungshülse (29) verläuft.

21. Verfahren zum Bewegen eines Verstellelementes (23) mit einer Vorspanneinrichtung (12) zum Schnellbewegen des Verstellelementes (23), wobei die Verstellvorrichtung(1) zusammen mit der Vorspanneinrichtung (12) durch eine Antriebseinrichtung (2) eine vorbestimmte Stellposition bewegt wird, wobei dass die Vorspanneinrichtung (12) von einem durch zumindest eine Sicherungseinrichtung (17) abgesicherten Getriebe (8) in einem vorgespannten Zustand gehalten wird, **dadurch gekennzeichnet, dass** das Getriebe (8) als Kniehebel (9) ausgestaltet ist.

22. Verfahren nach Anspruch 21, **dadurch gekennzeichnet, dass** ein Wegfall von Strom an einem Elektromagneten (20), einer Auslöseeinrichtung (19) zur Bewegung des zumindest einen Sicherungsstiftes (18) der Sicherungseinrichtung (17) führt, wodurch eine nachfolgende Bewegung des Getriebes (8) zu einer Umwandlung der in der Vorspanneinrichtung (12) gespeicherten Energie in eine vorzugsweise translatorische Bewegung einer Schiebeeinrichtung (4) mit darin integriertem Vorstellelement (23) führt.

23. Verfahren nach einem der Ansprüche 20 oder 21, **dadurch gekennzeichnet, dass** der Schließvorgang unter Einwirkung der sich entspannenden Vorspanneinrichtung 12 bis zu 200 ms schnell abläuft.
